# EUROPEAN PATENT SPECIFICATION

(11) **EP 1 841 817 B1**
(45) Date of publication and mention of the grant of the patent: **20.04.2011**
(21) Application number: 06719724.4
(22) Date of filing: 26.01.2006
(51) Int. Cl.: C08K 5/098, C09D 175/14

(54) **RADIATION-CURABLE COATING COMPOSITION**
STRAHLUNGSHÄRTBARE BESCHICHTUNGSZUSAMMENSETZUNG
COMPOSITION DE REVETEMENT DURCISSABLE PAR RAYONNEMENT

(30) Priority: 26.01.2005 US 647217 P
(43) Date of publication of application: 10.10.2007
(73) Proprietor: E.I. DU PONT DE NEMOURS AND COMPANY, Wilmington, DE 19898 (US)
(72) Inventor: NGUYEN, Phu, Qui, 41069 Moenchengladbach (DE); WILKENHOENER, Uwe, 42107 Wuppertal (DE); WULF, Martin, 40764 Langenfeld (DE)
(74) Representative: Biering, Christine
(86) International application number: PCT/US2006/002999
(87) International publication number: WO 2006/081456

(56) References cited:
- EP-A- 0 428 124
- EP-A- 0 518 142
- EP-A- 0 867 457
- US-A- 4 988 768
- US-B1- 6 552 140

## Description

### Background of the Invention

The invention relates to coating compositions curable by means of UV (ultraviolet light) radiation based on free-radically polymerizable binders, which compositions, after UV irradiation, give rise to fully cured coatings with satisfactory technological properties.

### Description of the Prior Art

Almost all radiation-curable binder systems based on the formation of free radicals exhibit the disadvantage of inhibition of the polymerization reaction by atmospheric oxygen, as a result of which the surface of an applied film is not completely cured and then exhibits, for example, inadequate hardness and scratch resistance. The inhibition is caused by the competitive reactions, which occur during free-radical polymerization in the presence of atmospheric oxygen, wherein the oxygen reacts with the free radicals arising at the surface and the latter are no longer available in their entirety for the polymerization reaction.

Various methods have already been developed for avoiding or reducing oxygen inhibition. One possibility is to use chemically modified resins, for example, in the case of unsaturated polyester resins, the inhibition effect may be overcome by incorporation of allyl ether groups. Trimethylolpropane diallyl ether may, for example, be used for this purpose. Another possibility, in principle, is to work in an inert gas atmosphere with exclusion of oxygen. Nitrogen or a carbon dioxide/nitrogen mixture is conventionally used for this purpose. It is also known to avoid oxygen inhibition by adding paraffins or similar waxy substances which form a protective film on the surface.

While the stated approaches do indeed in principle solve or minimize the problem of inhibition by atmospheric oxygen, they also cause additional difficulties with regard to process control or achieving certain technological properties of the coatings.

EP 428 124 describes solvent-based pigmented coatings which crosslink by means of a "UV redox system" (in this case a combination of an organic acid metal salt and a peroxide) and contain physically drying polymers, resins with ethylenically unsaturated groups, photoinitiators and metal salts of organic acids.

Application proceeds by initially applying an organic solution of a physically drying resin, for example, nitrocellulose, and a peroxide and heating the coating and then applying the above-stated coating composition and irradiating with UV radiation. The intention is in this manner to obtain coatings with a relief effect and good adhesion to the substrate.

WO 00/17241 describes polymerizable compositions activatable by atmospheric oxygen for use in the electrical industry, which contains free-radically polymerizable monomers, an activator system consisting of a beta-diketone, a transition metal salt and a weak acid. The compositions contain no peroxides or any other substances capable of forming free radicals in the absence of atmospheric oxygen. Apart from the crosslinking mechanism based on autoxidation by atmospheric oxygen, the composition may also comprise further crosslinking mechanisms, for example, curing by means of UV radiation or heat. In any event, the presence of the beta-diketone should bring about rapid, tack-free curing. Beta-diketones are stable in air, but exert their autoxidative action in the presence of a weak acid and a transition metal salt.

Ethylenically unsaturated binders, for example, ethylenically unsaturated polyurethanes, may in principle, such as, for example, described in EP 867 457, be crosslinked by heating in the presence of peroxides or azo compounds at elevated temperatures or at room temperature with driers, optionally, in combination with peroxides, or by irradiation with UV radiation in the presence of photoinitiators.

The above-stated prior art documents contain neither any mention of the problem of inhibition of free-radical polymerization by atmospheric oxygen in UV curing, nor any possible solution to this problem.

There is accordingly a requirement for coating compositions curable by means of UV radiation based on free-radically polymerizable binders, which yield fully cured films with acceptable technological properties without using elaborate methods, such as, for example, working under an inert atmosphere.

### Summary of the Invention

The invention relates to coating compositions curable by means of UV radiation comprising
A) at least one free-radically polymerizable oligomeric and/or polymeric binder containing olefinically unsaturated groups,
B) optionally, at least one free-radically polymerizable monomeric reactive diluent containing one or more olefinically unsaturated groups,
C) at least one photoinitiator for free-radical polymerization,
D) at least one metal compound selected from the group consisting of metal salt compounds containing the metal in the cation and/or anion of the compound, organometallic compounds, metal coordination compounds and mixtures thereof, wherein the metal or the metals are selected from the group consisting of a metal from groups 13-14 of the periodic system of elements and a transition metal, which metal or transition metal is able to occur in at least 2 oxidation states other than zero and
E) optionally, water, organic solvents, pigments, fillers and/or conventional coating additives,
with the proviso that the coating compositions contain substantially no physically drying binders and contain no beta-diketones, and the component A) consists of (meth)acryloyl-functional poly(meth)acrylates, polyurethane (meth)acrylates, polyester (meth)acrylates, unsaturated polyesters, polyether (meth)acrylates, epoxy (meth)acrylates, amino (meth)acrylates and melamine (meth)acrylates.

The invention also relates to a process for coating substrates comprising the steps:
I) applying a coating composition as described above onto an optionally precoated substrate and
II) curing the layer so applied by irradiation with UV radiation.

### Detailed Description of the Invention

It has surprisingly been found that the use of metal compounds of the above-stated type in coating compositions, which are cured by free-radical polymerization on irradiation with UV radiation, also gives rise to fully cured films when curing proceeds in a normal air atmosphere. The coating compositions according to the invention, in particular prove particularly advantageous if curing proceeds substantially by irradiation with UV radiation, where the disruptive influence of atmospheric oxygen on free-radical polymerization is normally particularly evident and gives rise to unacceptable film surfaces. Furthermore the presence of the metal compounds in the coating compositions allows using UV radiation of lower intensity without taking disadvantages in film surface properties.

The constituents of the coating compositions according to the invention will first of all be described in greater detail below.

The term (meth)acrylic as used here and hereinafter should be taken to mean methacrylic and/or acrylic.

All molecular weights (both number and weight average molecular weight) referred to herein are determined by GPC (gel permeation chromatography) using polystyrene as the standard, unless otherwise started.

The number average molar weight Mn of the compounds (A) may be, for example, 500 to 10,000 g/mole, preferably 500 to 5,000 g/mole. The binders may be used individually or as a mixture.

The compounds (A) may be used in combination with reactive diluents having one or more unsaturated free-radically polymerizable groups (component B).

Reactive diluent is the shorthand term for the longer name according to DIN 55945: 1996-09, which defines such substances as diluents which react chemically during film formation to become a constituent of the binder. Reactive diluents for radiation curing may be mono-, di- or polyfunctional free-radically polymerizable monomeric compounds, preferably, having (meth)acryloyl groups. The reactive diluents are of low molecular weight and have, for example, a molar mass of below 500 g/mol.

Examples of monounsaturated reactive diluents include: olefinically unsaturated monocarboxylic acids and esters of olefinically unsaturated monocarboxylic acids with aliphatic, cycloaliphatic or aromatic alcohols. Olefinically unsaturated monocarboxylic acids which may be considered are, for example, methacrylic acid, crotonic acid and isocrotonic acid. The alcohols in particular comprise aliphatic, cycloaliphatic or aromatic, monohydric branched or unbranched alcohols having 1-20 carbon atoms per molecule. Examples of (meth)acrylic acid esters with aliphatic alcohols are methyl acrylate, ethyl acrylate, isopropyl acrylate, tert.-butyl acrylate, n-butyl acrylate, isobutyl acrylate, 2-ethylhexyl acrylate, lauryl acrylate, stearyl acrylate and the corresponding methacrylates. Examples of (meth)acrylic acid esters with cycloaliphatic alcohols are cyclohexyl acrylate, trimethylcyclohexyl acrylate, 4-tert.-butylcyclohexyl acrylate, isobornyl acrylate and the corresponding methacrylates. Examples of (meth)acrylates with aromatic alcohols are benzyl (meth)acrylates.

Further examples of monounsaturated reactive diluents are maleic acid and semi-esters thereof, vinyl acetate, vinyl ethers, substituted vinylureas, styrene, vinyltoluene. Examples of diunsaturated reactive diluents include: di(meth)acrylates, such as, alkylene glycol di(meth)acrylate, polyethylene glycol di(meth)acrylate, 1,3-butanediol di(meth)acrylate, vinyl (meth)acrylate, allyl (meth)acrylate, divinylbenzene, dipropylene glycol di(meth)acrylate, hexanediol di(meth)acrylate. Examples of polyunsaturated reactive diluents are: glycerol tri(meth)acrylate, trimethylolpropane tri(meth)acrylate, pentaerythritol tri(meth)acrylate, pentaerythritol tetra(meth)acrylate. The reactive diluents may be used alone or in mixture.

The coating compositions according to the invention contain one or more photoinitiators for the radical polymerization (component C). Suitable photoinitiators include, for example, those that absorb in the wavelength range from 190 to 600 nm. The photoinitiators may be present for example, in quantities of 0.1 to 5 wt-%, preferably of 0.5 to 3 wt-%, relative to the sum of free-radically polymerizable binders, reactive diluents and photoinitiators. Examples of suitable photoinitiators are benzoin and derivatives thereof, acetophenone and derivatives thereof, for example, 2,2-diacetoxyacetophenone, benzophenone and derivatives thereof, thioxanthone and derivatives thereof, anthraquinone, 1-benzoylcyclohexanol, organophosphorus compounds, such as, acylphosphine oxides. The photoinitiators may be used individually or in combination.

The coating compositions according to the invention contain as component D) at least one metal compound selected from the group consisting of metal salt compounds containing the metal in the cation and/or anion of the compound, organometallic compounds, metal coordination compounds and mixtures thereof. Salt compounds containing the metal in the cation shall include compounds where the metal itself forms the cation. The metal comprises a metal of groups
13-14 of the periodic system of elements or a transition metal, which metal or transition metal is able to occur in at least 2 oxidation states other than zero. Oxidation states other than zero shall mean positive oxidation states.

Transition metal should be taken to mean the elements of groups 3-12 of the periodic system of elements, including the lanthanoides.

Examples of metals and transition metals which may be used are, for example, titanium, vanadium, chromium, manganese, iron, cobalt, nickel, copper, niobium, molybdenum, palladium, tungsten, platinum, tin and the lanthanoids, in particular cerium. Especially preferred are titanium, vanadium, chromium, manganese, iron, cobalt, nickel, copper and cerium.

Preferred components D) are metal salts of an organic and/or inorganic acid.

Examples of organic acids on which the metal salts, may be based are unsaturated higher fatty acids, such as, linseed oil fatty acid, tall oil fatty acid, soy oil fatty acid, resin acids (resinol acids), for example, based on diterpenes, such as, abietic, neoabietic, laevopimaric, pimaric and palustrinic acid and agathic acid, illuric acid and podocarpic acid, naphthenic acid, benzoic acid, acetic acid, oxalic acid and 2-ethylhexanoic acid and the isomers thereof.

Examples of inorganic acids on which the metal salts may be based are sulfuric acid, phosphoric acid, boric acid, nitric acid and hydrochloric acid.

Substances which may readily be used as component D) and which are also preferred are for example, the drying agents (or driers) known to the coatings specialist. Drying agents are metal salts of organic acids soluble in organic solvents and binders, which are added to oxidatively curing materials to catalyse the transfer of oxygen from the air (according to DIN 55945). The so-called primary drying agents may here be added alone or in combination with secondary drying agents (drying auxiliaries).

Corresponding cobalt, vanadium, tin, iron, cerium, copper or manganese salts may, for example, preferably be used as primary drying agents. Secondary drying agents which may be considered are, for example, the corresponding strontium, calcium, zinc or zirconium compounds. The drying agents and drying auxiliaries are obtainable as commercial products. Drying agents may, for example, be obtained from the company Borchers under the name Octa-Soligen^{®} for the corresponding octoates (for example, the primary drying agents Octa-Soligen^{®} cobalt and Octa-Soligen^{®} manganese), under the name Soligen^{®} for the corresponding naphthenates and under the name Borchers^{®} VP 0132 for organically modified vanadium compounds. Further drying agents may, for example, be obtained under the name Valirex, for example, Valirex Co 6% D60 as cobalt octoate, from the company Corn. Van Loocke N.V., Belgium. It is also possible that commercially available drying agents contain combinations of primary and secondary drying agents, e.g., Octa-Soligen 173 from Borchers, containing cobalt, zirkonium and barium salts of 2- ethylhexanoic acid and its isomers.

The drying agents conventionally assume the form of solutions in organic solvents, for example, as a 1-30% solution, but may also be provided in solvent-free form.

Substances which may preferably be used as component D) are cobalt, manganese, vanadium, iron, copper and cerium salts, in particular the corresponding salts of naphthenic acid, benzoic acid, acetic acid, oxalic acid and 2-ethylhexanoic acid and the isomers thereof. Cobalt octoates, manganese octoates, vanadium octoates, iron octoates and cerium octoates may in particular readily be used as well as cobalt naphtenates, manganese naphtenates, vanadium napthenates, iron naphthenates and cerium naphtenates.

Also mixed metal salts, such as, mixed metal salts of ethylhexanoic acid and naphthenic acid may be used (e.g. ethylhexanoic acid and naphthenic acid in a ratio of 1 mole : 1 mole).

The above-stated compounds may advantageously be combined, for example, with barium, calcium, strontium, zinc or zirconium salts (secondary drying agents), for example, the corresponding octoates or naphtenates, e.g., Octa-Soligen Zirkonium and Octa-Soligen Strontium from Borchers.

Furthermore, organometallic compounds and metal coordination compounds may also in principle be used as component D). Organometallic compounds are compounds having a direct covalent bonding between a metal atom and a carbon atom of an organic group. Examples of organometallic compounds, which may be used are disclosed in U.S. 5,212,210.

Examples of metal coordination compounds are metal chelates. Metal chelates are compounds where a single ligand occupies more than one coordination position at the central metal atom. Examples of metal chelates are metal acetyl acetonates, such as, vanadium acetyl acetonate and manganese acetyl acetonate.

It goes without saying that also mixed forms of the above mentioned metal salts, organometallic compounds and metal coordination compounds may be used as component D), e.g., metal coordination compounds in form of a salt.

The metal compounds D) may be used individually or in combination.

Use of the above-described metal compounds (component D) in UV curing free-radically polymerizable systems results in intervention in the chemical process of inhibition of free-radical polymerization by atmospheric oxygen, whereas in processes known from the prior art the disruptive atmospheric oxygen is prevented from coming into contact with the coating surfaces by incorporating additives into the coating composition or by process control measures, these latter approaches entailing the known disadvantages which have already been stated above. It is believed, that according to the invention the derived products arising during oxygen inhibition are broken back down into free radicals with the assistance of the metal compounds D), said free radicals then being again available to the curing reaction.

The coating compositions according to the invention contain preferably 0.05 to 10.0 wt.%, particularly preferably 1.0 to 3.0 wt.% of the above-stated metal compounds (component D), relative to the complete coating composition. The coating compositions contain component D) preferably according to a proportion of 10⁻⁵ to 10⁻¹ mol of metal per 100 g resin solids of the coating composition. Component D) is most preferably used in quantities such that a metal content of 10⁻⁴ to 5x10⁻² mol of metal per 100 g resin solids of the coating composition is obtained.

The resin solids of the coating composition should here be taken to mean the total of all solids from free-radically polymerizable oligomeric and/or polymeric binders containing olefinically unsaturated groups (component A), from optionally present free-radically polymerizable reactive diluents containing one or more olefinically unsaturated groups (component B) and from further optionally present binder constituents of the coating composition.

The coating compositions according to the invention contain substantially no physically drying binders, in particular, they contain no typical physically drying binders, such as, nitrocellulose, cellulose esters, such as, cellulose acetobutyrate and polyvinylbutyral derivatives and physically drying polyester, polyurethane, polyvinyl or polyacrylate resins. Containing substantially no physically drying binders here means that while minimal proportions of physically drying binders may optionally be present, they make no substantial contribution to the drying of the coating composition. Physically drying binders should here be taken to mean those binders which cure by release of solvent (organic solvent and/or water) at room temperature or at elevated temperature. The degree of polymerization and/or molar mass of the binders remain unchanged during this process. Physical curing may also proceed by coalescence of binder particles (see definition in Römpp Lacklexikon, pages 274-275).

The coating compositions according to the invention contain no beta-diketones. Preferably the coating compositions are also free of peroxides.

The coating compositions according to the invention may contain, in addition to the binder components free-radically polymerizable by means of high energy radiation, or in addition to the free-radically polymerizable functional groups, further binder components or further functional groups that are chemically cross-linkable by an additional curing mechanism. Further chemically cross-linking binders that may be used are, for example, those curable by addition and/or condensation reactions of appropriate functional groups.

The olefinic double bonds capable of free-radical polymerization and the functional groups that react together in the manner of addition and/or condensation reactions may be contained, in principle, in the same binder and/or in separate binders.

The functional groups that react together in the manner of addition and/or condensation reactions will be referred to hereinafter as further reactive functional groups. They are reactive functional groups A and reactive functional groups B complementary to the latter. Reactive functional groups A and reactive functional groups B may be present in the same binder and/or in separate binders.

The addition and/or condensation reactions in the above mentioned meaning are cross-linking reactions in coatings chemistry known to the skilled person, such as, ring-opening addition of an epoxide group to a carboxyl group with the formation of an ester group and an hydroxyl group, the addition of an hydroxyl group to an isocyanate group with the formation of a urethane group, the addition of an optionally blocked amino group to an isocyanate group with the formation of a urea group, the reaction of an hydroxyl group with a blocked isocyanate group with the formation of a urethane group and dissociation of the blocking agent, the reaction of an hydroxyl group with an N-methylol group with dissociation of water, the reaction of an hydroxyl group with an N-methylol ether group with dissociation of the etherification alcohol, the transesterification reaction of an hydroxyl group with an ester group with dissociation of the esterification alcohol, the transurethanization reaction of an hydroxyl group with a carbamate group with alcohol dissociation, the reaction of a carbamate group with an N-methylol ether group with dissociation of the etherification alcohol, the addition of an amino group to an epoxy group with ring opening and formation of a secondary hydroxyl group, and the addition reaction of an amino group or of an aceto acetyl group to a group with olefinically unsaturated double bonds, e.g., an acryloyl group. Preferably, the coating compositions according to the invention do not contain, in addition to the binder components, free-radically polymerizable by means of high energy radiation further binder components that are chemically cross-linkable by an additional curing mechanism. Preferably, curing of the coating compositions occurs solely by free-radical polymerization.

The coating compositions according to the invention may be pigmented or unpigmented coating compositions. Unpigmented coating compositions are, for example, coating compositions formulated in conventional manner as clear coats. Pigmented coating compositions may contain colour-imparting and/or special effect-imparting pigments. Suitable colour-imparting pigments are any conventional coating pigments of an organic or inorganic nature. Examples of inorganic or organic colour-imparting pigments are titanium dioxide, micronized titanium dioxide, iron oxide pigments, carbon black, azo pigments, phthalocyanine pigments, quinacridone or pyrrolopyrrole pigments. Examples of special effect-imparting pigments are metal pigments, for example, made from aluminium or copper; interference pigments, such as, metal oxide coated metal pigments, titanium dioxide coated mica. The coating compositions may also contain transparent pigments and/or soluble dyes. Examples of usable fillers are silicon dioxide, aluminium silicate, barium sulfate, calcium carbonate and talc.

The coating compositions may also contain conventional additives, e.g., conventional coating additives. Examples of conventional coating additives include levelling agents, rheological agents, such as, highly disperse silica or polymeric urea compounds, thickeners, for example, based on partially cross-linked, carboxy-functional polymers or on polyurethanes, defoamers, wetting agents, anticratering agents, catalysts, antioxidants and light stabilizers based on HALS products and/or UV absorbers. The additives are used in conventional amounts known to the person skilled in the art.

The coating compositions may be waterborne or solvent-based coating compositions. They may contain water and/or organic solvents. In the case of waterborne coating compositions, the binders contained may be ionically or nonionically stabilized in order to achieve sufficient water thinnability. Alternatively or in addition, it is possible to achieve water thinnability by means of external emulsifiers.

The organic solvents that may be contained in the coating compounds according to the invention are conventional paint solvents. These may originate from the preparation of the binders or may be added separately.

The coating compositions may also be 100%-compositions without any organic solvents and without water.

Curing of the coating compositions according to the invention occurs by radiating with UV radiation. Source of radiation comprises UV radiation sources emitting UV light in the wave length range from 180 to 420 nm, in particular from 200 to 400 nm Examples of such UV radiation sources are optionally doped high, medium and low pressure mercury vapour emitters, gas discharge tubes, such as, low pressure xenon lamps and UV lasers.

Apart from these continuously operating UV radiation sources, however, it is also possible to use discontinuous UV radiation sources. These are preferably so-called high-energy flash devices (UV flash lamps for short). The UV flash lamps may contain a plurality of flash tubes, for example, quartz tubes filled with inert gas such as, xenon. The UV flash lamps have an illuminance of at least 10 megalux, preferably from 10 to 80 megalux per flash discharge. The energy per flash discharge may be, for example, 1 to 10 kJoule.

The irradiation time with UV radiation when UV flash lamps are used as the UV radiation source may be, for example, in the range from 1 millisecond to 400 seconds, preferably from 4 to 160 seconds, depending on the number of flash discharges selected. The flashes may be triggered, for example, about every 4 seconds. Curing may take place, for example, by means of 1 to 40 successive flash discharges.

If continuous UV radiation sources are used, the irradiation time may be in the range from a few seconds to about 5 minutes, preferably less than 5 minutes. The distance between the UV radiation sources and the surface to be irradiated may be, for example, 5 to 60 cm.

In order to cure the coating composition by means of the additional crosslinking mechanism, the coatings may be left after the irradiation process to cure completely, for example, at room temperature, e.g., for 16-24 hours. It is also possible to carry out full curing at higher temperatures of, for example, 30°C to 140°C or at lower temperatures of, e.g., 40°C to 80°C. Complete curing may take place by conventional methods, e.g., in a heated chamber or by means of IR radiation. Depending on the curing temperature, curing times from, e.g., 1 to 60 minutes are possible. Of course, it is also possible to carry out the thermal curing before the irradiation process as well as both before and after the irradiation process.

However, even if there are no further possibilities for chemical crosslinking in addition to the principal crosslinking reaction (free-radical polymerization initiated by UV radiation), it may be advantageous to provide thermal assistance to the UV radiation crosslinking. For example, UV radiation emitters and infrared (IR) radiation emitters may be used in parallel or alternately.

The coating compositions according to the invention may be applied onto conventional substrates, such as, metals, plastics, packaging materials, either directly or onto preexisting coatings. Application may proceed in a manner and in a film thickness suitable for the intended purpose, for example, by means of spray application. Application may proceed as a single layer coating or in the context of multilayer coating.

The coating compositions according to the invention may advantageously be used in a range of different coating systems for the most varied applications, specifically wherever coating compositions curable by means of UV radiation are to be used. There is accordingly no particular restriction as to the area of application. The coating compositions according to the invention may particularly advantageously be used wherever severe inhibition of the curing reaction by atmospheric oxygen is to be suppressed, but the measures known from the prior art, such as, for example, working under an inert gas atmosphere, cannot practically be applied.

The coating compositions according to the invention yield coatings with good hardness and good solvent resistance.

The following Examples are intended to illustrate the invention in greater detail.

### Examples

### Production of Clear Coats

Clear coats 1 and 2 were produced by vigorously mixing the following components with different components D), while the corresponding comparison clear coats 1 and 2 were produced without component D):

### Clear Coat 1

43.77 wt.% of a urethane acrylate (according to example 1a of EP 1 227 895 B1)
10.94 wt.% Ebecryl^{®} 5129 (conventional commercial aliphatic urethane acrylate from UCB)
0.98 wt.% Darocur^{®} 1173 (conventional commercial photoinitiator from CIBA)
0.33 wt.% Irgacur^{®} 819 (conventional commercial photoinitiator from CIBA)
0.11 wt.% Dow Corning 31 (conventional commercial levelling agent from Dow Corning)
0.55 wt.% Tinuvin^{®} 400 (conventional commercial light stabiliser from C I BA)
41.12 wt.% butyl acetate 98/100
2.19 wt.% Octa Soligen^{®} Fe 7/8 (conventional commercial drying agent based on the iron salts of 2-ethylhexanoic acid and the isomers thereof from Borchers)

### Comparison Clear Coat 1

Clear Coat 1, but without Octa Soligen^{®} Fe 7/8, was used as comparison clear coat 1.

### Clear Coat 2

80.19 wt.% of a urethane acrylate (according to example 1a of EP 1 227 895 B1)
1.36 wt.% Darocur^{®} 1173 (conventional commercial photoinitiator from CIBA)
0.45 wt.% Irgacur^{®} 819 (conventional commercial photoinitiator from CIBA)
0.81 wt.% Byk 348 (conventional commercial surface additive based on polydimethylsiloxane from Byk)
16.58 wt.% butyl acetate 98/100
0.61 wt.% Octa Soligen 69^{®} (conventional commercial drying agent based on the cobalt and zirconium salts of 2-ethylhexanoic acid and the isomers thereof from Borchers)

### Comparison Clear Coat 2

Clear Coat 2, but without Octa Soligen 69,^{®} was used as comparison clear coat 2.

Clear Coats 1 and 2 and comparison clear coats 1 and 2 were applied onto coil coating sheets with a coating knife to a wet film thickness of 75 µm (which corresponded to a dry film thickness of approx. 33 µm).

The coatings were then dried for 5 minutes in a circulating air oven at 80°C and subsequently irradiated for 60 seconds at a distance from the substrate surface to the radiation source 20 cm with a conventional commercial UV radiation source (Philips HB 404 half body solarium).

### Technological Properties of the Coatings Obtained

The cured coatings were tested with regard to pendulum hardness.

| | Pendulum Hardness (1) |
|---|---|
| Clear coat 1 | 117 |
| Comparison clear coat 1 | 95 |
| Clear coat 2 | 75 |
| Comparison clear coat 2 | 69 |

| | |
|---|---|
| (1) Pendulum hardness was determined by the König method in accordance with DIN EN ISO 1522. | |

It could be seen that the clear coats according to the invention exhibit greater hardness than the comparison clear coats without drying agents (component D). The greater pendulum hardness may here be considered to be a measure of higher crosslink density and thus improved full curability.

## Claims

1. A coating composition curable by means of UV radiation, comprising
A) at least one free-radically polymerizable oligomeric and/or polymeric binder containing olefinically unsaturated groups,
B) optionally, at least one free-radically polymerizable monomeric reactive diluent containing one or more olefinically unsaturated groups,
C) at least one photoinitiator for free-radical polymerization,
D) at least one metal compound selected from the group consisting of metal salt compounds containing the metal In the cation and/or anion of the salt compound, organometallic compounds, metal coordination compounds and mixtures thereof, wherein the metal or the metals are selected from the group consisting of a metal from groups 13-14 of the periodic system of elements and a transition metal, which metal or transition metal is able to occur in at least 2 oxidation states other than zero and
E) optionally, water, organic solvents, pigments, fillers and/or conventional coating additives,
with the proviso that the coating composition contains substantially no physically drying binders and wherein the coating composition contains no beta-diketones and component A) consists of (meth)acryloyl-functional poly(meth)acrylates, polyurethane (meth)acrylates, polyester (meth)acrylates, unsaturated polyesters, polyether (meth)acrylates, epoxy (meth)acrylates and/or melamine (meth)acrylates.

2. A coating composition according to claim 1, wherein the metal in component D) is a metal selected from the group consisting of titanium, vanadium, chromium, manganese, iron, cobalt, nickel, copper, cerium and mixtures of these metals.

3. A coating composition according to claim 1, wherein the metal compound D) comprises at least one metal salt of organic and/or inorganic acid.

4. A coating composition according to claim 3, wherein the organic acid is an organic acid selected from the group consisting of unsaturated higher fatty acids, resin acid, naphthenic acid, benzoic acid, acetic acid, oxalic acid and 2-ethylhexanoic acid and the isomers thereof and mixtures of these acids.

5. A coating composition according to claim 3, wherein the inorganic acid is an inorganic acid selected from the group consisting of sulfuric acid, phosphoric acid, boric acid, nitric acid and hydrochloric acid.

6. A coating composition according to claim 3, wherein the at least one metal salt of an organic and/or inorganic acid comprises the titanium, vanadium, chromium, manganese, iron, cobalt, nickel, copper and/or cerium salt of naphthenic acid, benzoic acid, acetic acid, oxalic acid and/or 2-ethylhexanoic acid and the isomers thereof.

7. A coating composition according to claim 1, wherein the metal compounds D) comprise those selected from the group consisting of cobalt octoates, manganese octoates, vanadium octoates, iron octoates, cerium octoates, cobalt naphtenates, manganese naphtenates, vanadium naphtenates, iron naphtenates, cerium naphtenates and mixtures thereof.

8. A coating composition according to claim 1, wherein component D) is present in the coating composition in a quantity such that a metal content of 10⁻⁵ to 10⁻¹ mol of metal per 100 g of resin solids of the coating composition Is obtained.

9. The coating composition according to claim 1, wherein component D) is present in the coating composition in a quantity such that a metal content of 10⁻⁴ to 5x10⁻² mol of metal per 100 g of resin solids of the coating composition is obtained.

10. The coating composition according to claim 1, wherein the olefinically unsaturated groups of component A) and component B) are (meth)acryloyl groups.

11. A process for coating substrates, comprising the steps:
I) applying a coating composition according to claim 1 onto an optionally precoated substrate and
II) curing the layer so applied by irradiation with UV radiation.

12. A process according to claim 11, wherein the coating composition applied in step I is a pigmented or non-pigmented coating composition.

## Patentansprüche

1. Beschichtungszusammensetzung, die durch UV-Strahlung aushärtbar ist, umfassend:
A) mindestens ein radikalpolymerisierbares, oligomeres und/oder polymeres Bindemittel, das olefinisch ungesättigte Gruppen enthält,
B) wahlweise mindestens ein radikalpolymerisierbares, monomeres, reaktionsfähiges Verdünnungsmittel, das eine oder mehrere olefinisch ungesättigte Gruppen enthält;
C) mindestens einen Photoinitiator für die Radikalpolymerisation;
D) mindestens eine Metallverbindung, die aus der Gruppe ausgewählt ist bestehend aus Metallsalzverbindungen, die das Metall im Kation und/oder Anion der Salzverbindung enthalten, Organometallverbindungen, Metallkoordinationsverbindungen und Mischungen davon, wobei das Metall oder die Metalle aus der Gruppe ausgewählt sind bestehend aus einem Metall der Gruppen 13-14 des Periodensystems der Elemente und einem Übergangsmetall, welches Metall oder Übergangsmetall in der Lage ist, in mindestens zwei Oxidationszuständen, bei denen es sich nicht um einen Nullzustand handelt, aufzutreten, und
E) wahlweise Wasser, organische Lösungsmittel, Pigmente, Füllstoffe und/oder herkömmliche Beschichtungszusatzmittel
mit der Maßgabe, dass die Beschichtungszusammensetzung im Wesentlichen keine physikalisch trocknenden Bindemittel enthält und wobei die Beschichtungszusammensetzung keine Beta-Diketone enthält und die Komponente A) aus (Meth)acryloyl-funktionellen Poly(meth)acrylaten, Polyurethan(meth)acrylaten, Polyester(meth)acrylaten, ungesättigten Polyestern, Polyether(meth)acrylaten, Epoxy(meth)acrylaten und/oder Melamin(meth)acrylaten besteht.

2. Beschichtungszusammensetzung nach Anspruch 1, wobei das Metall in der Komponente D) ein Metall ist, das aus der Gruppe ausgewählt ist bestehend aus Titan, Vanadium, Chrom, Mangan, Eisen, Kobalt, Nickel, Kupfer, Cer und Mischungen dieser Metalle.

3. Beschichtungszusammensetzung nach Anspruch 1, wobei die Metallverbindung D) mindestens ein Metallsalz organischer und/oder anorganischer Säure umfasst.

4. Beschichtungszusammensetzung nach Anspruch 3, wobei die organische Säure eine organische Säure ist, die aus der Gruppe ausgewählt ist bestehend aus ungesättigten höheren Fettsäuren, Harzsäure, Naphthensäure, Benzoesäure, Essigsäure, Oxalsäure und 2-Ethylhexansäure und den Isomeren davon und Mischungen dieser Säuren.

5. Beschichtungszusammensetzung nach Anspruch 3, wobei die anorganische Säure eine anorganische Säure ist, die aus der Gruppe ausgewählt ist bestehend aus Schwefelsäure, Phosphorsäure, Borsaure, Salpetersäure und Salzsäure.

6. Beschichtungszusammensetzung nach Anspruch 3, wobei das mindestens eine Metallsalz einer organischen und/oder anorganischen Säure das Titan-, Vanadium-, Chrom-, Mangan-, Eisen-, Kobalt-, Nickel-, Kupfer- und/oder Cersalz von Naphthensäure, Benzoesäure, Essigsäure, Oxalsäure und/oder 2-Ethylhexansäure und den Isomeren davon umfasst.

7. Beschichtungszusammensetzung nach Anspruch 1, wobei die Metallverbindungen D) diejenigen umfasst, die aus der Gruppe ausgewählt sind bestehend aus Kobaltoctoaten, Manganoctoaten, Vanadiumoctoaten, Eisenoctoaten, Ceroctoaten, Kobaltnaphthenaten, Mangannaphthenaten, Vanadiumnaphthenaten, Eisennaphthenaten, Cernaphthenaten und Mischungen davon.

8. Beschichtungszusammensetzung nach Anspruch 1, wobei die Komponente D) in der Beschichtungszusammensetzung in einer Menge vorliegt, derart, dass ein Metallgehalt von 10⁻⁵ bis 10⁻¹ Mol Metall pro 100 g Harzfeststoffe der Beschichtungszusammensetzung erhalten wird.

9. Beschichtungszusammensetzung nach Anspruch 1, wobei die Komponente D) in der Beschichtungszusammensetzung in einer Menge vorliegt, derart, dass ein Metallgehalt von 10⁻⁴ bis 5x10⁻² Mol Metall pro 100 g Harzfeststoffe der Beschichtungszusammensetzung erhalten wird.

10. Beschichtungszusammensetzung nach Anspruch 1, wobei die olefinisch ungesättigten Gruppen der Komponente A) und Komponente B) (Meth)acryloylgruppen sind.

11. Verfahren zum Beschichten von Substraten, umfassend die Schritte:
I) des Auftragens einer Beschichtungszusammensetzung nach Anspruch 1 auf ein wahlweise vorbeschichtetes Substrat und
II) des Aushärtens der so aufgebrachten Schicht durch Bestrahlen mit UV-Strahlung.

12. Verfahren nach Anspruch 11, wobei die Beschichtungszusammensetzung, die in Schritt I aufgebracht wird, eine pigmentierte oder nichtpigmentierte Beschichtungszusammensetzung ist.

## Revendications

1. Composition de revêtement durcissable au moyen d'un rayonnement UV, comprenant
A) au moins un liant oligomère et/ou polymère polymérisable par réaction radicalaire contenant des groupes oléfiniquement insaturés,
B) facultativement, au moins un diluant monomère réactif polymérisable par réaction radicalaire contenant un ou plusieurs groupes oléfiniquement insaturés,
C) au moins un photoinitiateur pour la polymérisation radicalaire,
D) au moins un composé métallique choisi dans le groupe constitué par les composés de sels métalliques contenant le métal dans le cation et/ou l'anion du composé de sel, les composés organométalliques, les composés de coordination métalliques et les mélanges de ceux-ci, dans lequel le métal ou les métaux sont choisis dans le groupe constitué par un métal des groupes 13-14 du système périodique des éléments et un métal de transition, lequel métal ou métal de transition est apte à se trouver dans au moins 2 états d'oxydation autres que zéro, et
E) facultativement, de l'eau, des solvants organiques, des pigments, des charges et/ou des additifs de revêtement classiques,
avec pour condition que la composition de revêtement ne contient essentiellement pas de liants physiquement séchants et que la composition de revêtement ne contient pas de bêta-dicétones et que le constituant A) consiste en poly(méth)acrylates à fonction (méth)acryloyle, (méth)acrylates de polyuréthane, (méth)acrylates de polyester, polyesters insaturés, (méth)acrylates de polyéther, (méth)acrylates d'époxy et/ou (méth)acrylates de mélamine.

2. Composition de revêtement selon la revendication 1, dans laquelle le métal dans le constituant D) est un métal choisi dans le groupe constitué par le titane, le vanadium, le chrome, le manganèse, le fer, le cobalt, le nickel, le cuivre, le cérium et les mélanges de ces métaux.

3. Composition de revêtement selon la revendication 1, dans laquelle le composé métallique D) comprend au moins un sel métallique d'acide organique et/ou inorganique.

4. Composition de revêtement selon la revendication 3, dans laquelle l'acide organique est un acide organique choisi dans le groupe constitué par les acides gras supérieurs insaturés, un acide résinique, l'acide naphténique, l'acide benzoïque, l'acide acétique, l'acide oxalique et l'acide 2-éthylhexanoïque et les isomères de ceux-ci et les mélanges de ces acides.

5. Composition de revêtement selon la revendication 3, dans laquelle l'acide inorganique est un acide inorganique choisi dans le groupe constitué par l'acide sulfurique, l'acide phosphorique, l'acide borique, l'acide nitrique et l'acide chlorhydrique.

6. Composition de revêtement selon la revendication 3, dans laquelle ledit au moins un sel métallique d'un acide organique et/ou inorganique comprend le sel de titane, de vanadium, de chrome, de manganèse, de fer, de cobalt, de nickel, de cuivre et/ou de cérium de l'acide naphténique, de l'acide benzoïque, de l'acide acétique, de l'acide oxalique et/ou de l'acide 2-éthylhexanoïque et les isomères de ceux-ci.

7. Composition de revêtement selon la revendication 1, dans laquelle les composés métalliques D) comprennent ceux choisis dans le groupe constitué par les octoates de cobalt, les octoates de manganèse, les octoates de vanadium, les octoates de fer, les octoates de cérium, les naphténates de cobalt, les naphténates de manganèse, les naphténates de vanadium, les naphténates de fer, les naphténates de cérium et les mélanges de ceux-ci.

8. Composition de revêtement selon la revendication 1, dans laquelle le constituant D) est présent dans la composition de revêtement en une quantité telle qu'une teneur en métal de 10⁻⁵ à 10⁻¹ mole de métal par 100g de matières solides de résine de la composition de revêtement est obtenue.

9. Composition de revêtement selon la revendication 1, dans laquelle le constituant D) est présent dans la composition de revêtement en une quantité telle qu'une teneur en métal de 10⁻⁴ à 5x10⁻² mole de métal par 100g de matières solides de résine de la composition de revêtement est obtenue.

10. Composition de revêtement selon la revendication 1, dans laquelle les groupes oléfiniquement insaturés du constituant A) et du constituant B) sont des groupes (méth)acryloyles.

11. Procédé pour revêtir des substrats, comprenant les étapes:
I) d'application d'une composition de revêtement selon la revendication 1 sur un substrat facultativement prérevêtu et
II) le durcissement de la couche ainsi appliquée par irradiation avec un rayonnement UV.

12. Procédé selon la revendication 11, dans lequel la composition de revêtement appliquée dans l'étape I est une composition de revêtement pigmentée ou non pigmentée.
